# FASCICULE DE BREVET EUROPEEN

(11) **EP 2 543 583 B1**
(45) Date de publication et mention de la délivrance du brevet: **21.01.2015**
(21) Numéro de dépôt: 12172472.8
(22) Date de dépôt: 18.06.2012
(51) Int. Cl.: F16D 55/22, F16D 55/30, F16D 125/60, F16D 125/64, B62L 1/14, B60T 1/06, B60T 11/04, B62K 19/38, B62K 21/02

(54) **Ensemble porteur de roue de bicyclette muni de frein intégré**
Halterungseinheit für Rad eines Fahrrads, die mit einer integrierten Bremse ausgestattet ist
Bicycle wheel supporting assembly with integrated brake

(30) Priorité: 08.07.2011 FR 1156220
(43) Date de publication de la demande: 09.01.2013
(73) Titulaire: Look Cycle International, 58000 Nevers (FR)
(72) Inventeur: Servet, Sébastien, 58000 Nevers (FR)
(74) Mandataire: Laget, Jean-Loup

(56) Documents cités:
- EP-A1- 1 518 786
- EP-A1- 1 886 910

## Description

L'invention est relative à un ensemble porteur de roue de bicyclette muni de frein à patins sur jante intégré dans la structure de l'ensemble porteur.

L'invention couvre notamment les ensembles porteurs de roue de bicyclette constitués d'une fourche avant.

L'invention couvre également les ensembles porteurs de roué de bicyclette faisant partie du cadre de la bicyclette, par exemple les bases ou les haubans arrière.

On connaît de nombreux mécanismes de freins de bicyclette utilisant des étriers appliquant par effet de levier les patins sur une jante de roue de bicyclette.

Pour améliorer l'aérodynamisme des bicyclettes, les constructeurs tendent actuellement à intégrer les étriers de freins au cadre de la bicyclette ou à la fourche de la bicyclette.

Dans le cas où le frein intégré possède un réglage, on peut utiliser un capot de forme aérodynamique pour protéger le mécanisme de frein.

Dans le cas où le frein intégré ne comporte pas de réglage, on peut fabriquer la fourche et les bras porte patins de frein d'un seul tenant sans utiliser de capot aérodynamique.

EP 1886910 divulge un ensemble porteur de roue de bicyclette muni de frein à patins selon le préambule de la revendication 1.

Un but de l'invention est d'améliorer l'état de la technique connue, en proposant un nouvel ensemble porteur de roue de bicyclette avec frein intégré.

L'invention a pour objet un ensemble porteur de roue de bicyclette muni de frein à patins sur jante intégré dans la structure de l'ensemble porteur, ledit frein à patins comportant deux bras actionneurs et deux bras porte patins, caractérisé par le fait que chaque bras actionneur associé à un bras porte patin est articulé dans un évidement de la structure de l'ensemble entre une première position de fonctionnement et d'escamotage à l'intérieur de la structure de l'ensemble porteur, et une deuxième position d'accès au bras porte patin.

Selon d'autres caractéristiques alternatives de l'invention :
- Un moyen de réglage est interposé entre chaque bras actionneur et le bras porte patin correspondant.
- Les bras actionneurs et les bras porte patins sont contraints l'un contre l'autre par des ressorts de rappel en position de relâchement des patins sans freiner la jante.
- Les bras actionneurs sont reliés par leur deuxième extrémité à un moyen d'actionnement du frein à patins.
- Le moyen d'actionnement du frein à patins comporte une pièce en triangle articulée sur un bras actionneur, relié à l'autre bras actionneur par un tirant et relié à une commande de traction destinée à rapprocher les deux bras actionneurs lors du freinage.
- Chaque bras actionneur comporte un passage pour un outil d'ajustage du moyen de réglage interposé entre chaque bras actionneur et le bras porte patin correspondant.
- Le moyen de réglage interposé entre chaque bras actionneur et le bras porte patin correspondant est un moyen de réglage par vissage du contact entre bras porte patin et bras actionneur.
- Le moyen de réglage est une vis d'écartement montée dans le bras porte patin et accessible à travers une lumière pratiquée dans le bras actionneur correspondant.

L'invention sera mieux comprise grâce à la description qui va suivre, donnée à titre d'exemple non limitatif en référence aux dessins annexés dans lesquels :
La figure 1 représente schématiquement une vue en perspective d'un ensemble porteur selon l'invention.
La figure 2 représente schématiquement une vue en perspective d'un ensemble de frein destiné à équiper un ensemble porteur selon l'invention.
La figure 3 représente schématiquement une vue de face partielle d'un ensemble de frein en position de serrage.
La figure 4 représente schématiquement un ensemble porteur en position d'accès à un bras porte patin de freinage.
La figure 5 représente schématiquement une vue en perspective d'un ensemble porteur dans une position voisine de la position de la figure 4.
La figure 6 représente schématiquement une vue partielle illustrant le montage d'un bras actionneur et d'un bras porte patin.

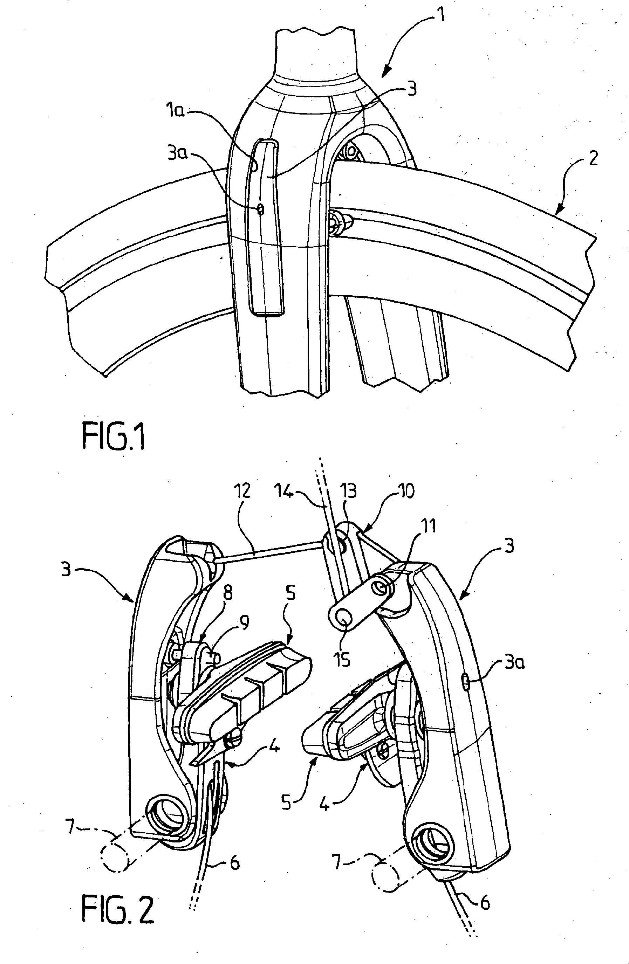

En référence aux figures 1 à 6, les éléments identiques ou fonctionnellement équivalents sont repérés par des chiffres de référence identiques.

Sur la figure 1, un ensemble (1) porteur d'une roue (2) de bicyclette est conformé en fourche de bicyclette.

L'invention s'applique également dans le cas où l'ensemble porteur de roue est conformé en partie de cadre de bicyclette, au lieu d'être conformé en fourche de bicyclette.

L'invention s'applique en particulier et alternativement à un ensemble porteur constitué par des bases de cadre comportant un frein intégré.

L'invention s'applique en particulier et alternativement à des haubans de bicyclette comportant un frein intégré.

L'ensemble (1) porteur de la roue (2) de bicyclette comporte de chaque côté de la roue de bicyclette un évidement (1a) dans lequel est logé un bras actionneur (3), en affleurement aérodynamique.

Le bras actionneur (3) est monté dans l'évidement (1a) de l'ensemble porteur (1) par un axe d'articulation disposé à l'extrémité radialement intérieure du bras actionneur (3).

Cette disposition permet d'avoir un bras de levier important pour le serrage du frein à patins sur la jante de la roue (2).

De préférence chaque bras actionneur comporte un passage ou une lumière pour ajuster un moyen de réglage interposé entre chaque bras actionneur et un bras porte patin correspondant.

Sur la figure 2, un frein à patins intégré dans un ensemble porteur de roue selon l'invention comporte deux bras actionneurs (3), deux bras porte patins (4), deux patins (5), et deux ressorts de rappel (6) contraignant les bras porte patins (4) en position de relâchement des patins sans freiner la jante.

Des accessoires tels que vis et rondelles de fixation sont prévus de manière connue pour le montage des patins (5).

Un moyen de réglage (8) interposé entre chaque bras actionneur (3) et le bras porte patin (4) correspondant est prévu pour régler l'écartement et le contact entre bras actionneur (3) et bras porte patin (4).

Le moyen de réglage interposé entre chaque bras actionneur (3) et le bras porte patin (4) correspondant est avantageusement un moyen de réglage par vissage du contact entre bras porte patin (4) et bras actionneur (3).

Dans l'exemple représenté, ce moyen de réglage est une vis (9) d'écartement montée dans le bras porte patin (4) et présentant une tête accessible à travers la lumière (3a) pratiquée dans le bras actionneur (3) correspondant.

Le moyen de réglage peut également consister en une came excentrique, un insert de taille prédéterminée à disposer entre les deux bras ou tout autre moyen assurant un positionnement du bras actionneur (3) et du bras porte patin (4) à l'encontre du ressort de rappel (6).

Les extrémités radialement extérieures des bras actionneurs (3) sont reliées entre elles et à un moyen d'actionnement du frein à patins.

Le moyen d'actionnement du frein à patins comporte de préférence une pièce (10) en triangle articulée sur un bras actionneur (3) par un axe (11). La pièce en triangle (10) est reliée à l'autre bras actionneur (3) par un tirant (12) monté sur un tourillon (13) et est reliée à une commande (14) de traction par un autre tourillon (15).

La commande (14) de traction peut être une commande mécanique, une commande hydraulique ou une commande électrique.

La commande (14) de traction exerce vers le haut une force tendant à basculer la pièce en triangle (10) dans le sens du rapprochement des extrémités supérieures des bras actionneurs (3).

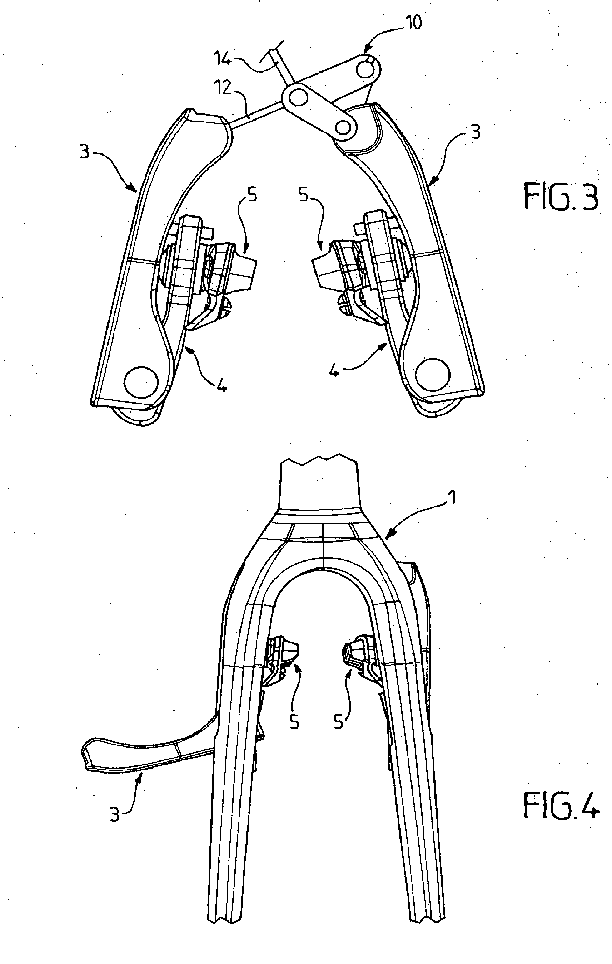

Sur la figure 3, le frein à patins intégré selon l'invention est représenté en position de freinage.

Dans cette position de freinage, le triangle (10) est basculé vers le haut autour de l'axe (11) et exerce un déplacement sur le tirant (12) pour rapprocher les extrémités supérieures des bras actionneurs (3).

Les bras actionneurs (3) appuient sur les bras porte patins (4) pour exercer un effort par l'intermédiaire des patins (5) sur la jante de roue non représentée et provoquer ainsi le freinage.

Sur la figure 4, le tirant (12) a été décroché pour libérer un bras actionneur (3).

Le rabattement manuel du bras actionneur (3) libère l'accès à l'évidement (1a) a) de l'ensemble porteur de roue selon l'invention.

La libération de cet accès permet d'agir sur les vis de fixation du patin (5) en vue de son remplacement ou de son ajustage par rapport au bras porte patin (4).

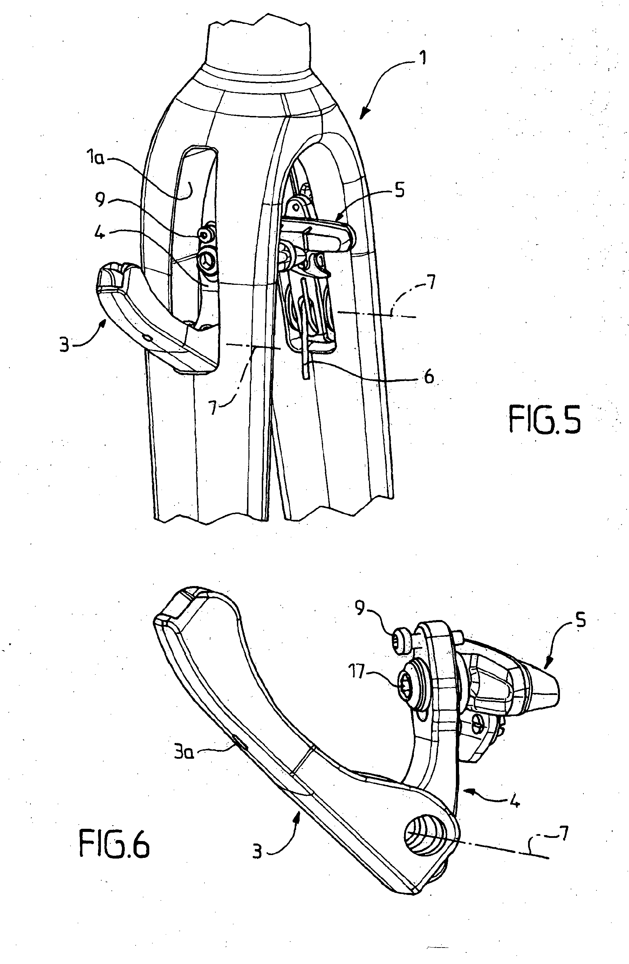

Sur la figure 5, un ensemble porteur de roue selon l'invention est représenté en position semi-ouverte.

. La position semi-ouverte permet l'accès à un bras porte patin (4), à l'intérieur de l'évidement (1a).

Du fait que les bras porte patins et les bras actionneurs sont articulés autour d'un axe (7) avec liberté relative de mouvement l'un par rapport à l'autre, il est possible de rabattre manuellement un bras actionneur (3) sans interférer avec le réglage des bras porte patins (4).

Cette disposition permet à la fois de garantir un aérodynamisme grâce à l'effacement des bras porte patins (4) et des bras actionneurs (3) à l'intérieur du contour des branches d'un ensemble porteur selon l'invention, et de ne pas interférer avec le réglage du bras porte patin (4) qui devient ainsi indépendant du réglage de l'appui entre bras porte patin (4) et bras actionneur (3).

Le réglage de l'ensemble porteur de roue selon l'invention peut ainsi être effectué en deux temps : on règle tout d'abord les bras porte patins (4) et les patins (5) pour avoir un bon positionnement par rapport à la jante de la roue qui doit être freinée, puis on règle ensuite la position relative des bras actionneurs (3) et des bras porte patins (4) à l'aide des moyens de réglage (8) pour assurer un affleurement des bras à l'intérieur du contour d'un ensemble porteur selon l'invention.

Le ressort de rappel (6) en position de relâchement des patins sans freiner la jante empêche les bras porte patins (4) de basculer vers la roue à freiner.

L'appui exercé par les bras actionneurs (3) sur les bras porte patins (4) par l'intermédiaire d'une vis d'écartement (9) permet ensuite le réglage de l'aérodynamisme du contour extérieur d'un ensemble porteur selon l'invention.

Sur la figure 6, l'agencement d'un bras actionneur (3) avec un bras porte patin (4) est représenté plus en détail.

La vis (9) de réglage d'écartement et d'appui est positionnée au-dessus d'une vis (17) de montage du patin (5), de manière à assurer un centrage grâce à la tête de la vis (9) dans une conformation correspondante du bras actionneur (3).

L'empreinte hexagonale de la vis (9) est accessible à travers la lumière (3a) pratiquée dans le bras actionneur (3).

Le bras de levier du bras actionneur (3) est environ de longueur double du bras de levier entre l'axe (7) d'articulation et le point d'implication du patin (5) sur la jante de la roue non représentée.

. Cette disposition permet lors du freinage par sollicitation des bras actionneurs (3) l'un envers l'autre d'obtenir une grande force de freinage, tout en préservant les caractéristiques aérodynamiques recherchées grâce à l'invention.

Le fait de prévoir des réglages indépendants pour le bras porte patin et pour le bras actionneur ajoute également à la facilité de remplacement du patin et à la sécurité des cyclistes.

L'invention décrite en référence à un mode de réalisation particulier, ne lui est nullement limitée, mais couvre au contraire toute modification de forme et toute variante de réalisation dans le cadre des revendications annexées.

## Revendications

1. Ensemble (1) porteur de roue (2) de bicyclette muni de frein à patins (5) sur jante intégré dans la structure de l'ensemble porteur (1), ledit frein à patins comportant deux bras actionneurs (3) et deux bras porte patins (4), **caractérisé par le fait que** chaque bras actionneur (3) associé à un bras porte patin (4) est articulé dans un évidement (1a) de la structure de l'ensemble porteur (1) en étant déplaçable entre une première position de fonctionnement et d'escamotage à l'intérieur de la structure et une deuxième position d'accès au bras porte patin (4).

2. Ensemble porteur selon la revendication 1, **caractérisé par le fait qu'**un moyen de réglage (8) est interposé entre chaque bras actionneur (3) et le bras porte patin (4) correspondant.

3. Ensemble porteur selon la revendication 1 ou la revendication 2, **caractérisé par le fait que** les bras actionneurs (3) et les bras porte patins (4) sont contraints l'un contre l'autre par des ressorts (6) de rappel en position de relâchement des patins sans freiner la jante.

4. Ensemble porteur selon l'une quelconque des revendications 1 à 3, **caractérisé par le fait que** les bras actionneurs (3) sont reliés par leurs deuxièmes extrémités à un moyen d'actionnement (14) du frein à patins.

5. Ensemble porteur selon la revendication 4, **caractérisé par le fait que** le moyen d'actionnement du frein à patins comporte une pièce en triangle (10) articulée sur un bras actionneur (3), relié à l'autre bras actionneur (3) par un tirant (12) et relié à une commande (14) de traction destinée à rapprocher les deux bras actionneurs (3) lors du freinage.

6. Ensemble porteur selon la revendication 2, **caractérisé par le fait que** chaque bras actionneur (3) comporte un passage (3a) pour un outil d'ajustage du moyen de réglage (8) interposé entre chaque bras actionneur (3) et le bras porte patin (4) correspondant.

7. Ensemble porteur selon la revendication 2 ou la revendication 6, **caractérisé par le fait que** le moyen de réglage (8) interposé entre chaque bras actionneur (3) et le bras porte patin (4) correspondant est un moyen de réglage par vissage du contact entre bras porte patin (4) et bras actionneur (3).

8. Ensemble porteur selon la revendication 7, **caractérisé par le fait que** le moyen de réglage (8) comporte une vis (9) d'écartement montée dans le bras porte patin (4) et accessible à travers une lumière (3a) pratiquée dans le bras actionneur (3) correspondant.

## Patentansprüche

1. Haltungseinheit (1) für ein Rad (2) eines Fahrrads, die mit einer in die Struktur der Haltungseinheit (1) integrierten Felgenbackenbremse (5) ausgestattet ist, wobei die Backenbremse zwei Aktuatorarme (3) und zwei die Backenbremse tragende Arme (4) aufweist, **dadurch gekennzeichnet, dass** jeder einem die Backenbremse tragenden Arm (4) zugeordneter Aktuatorarm (3) in einer Aussparung (1a) der Struktur der Haltungseinheit (1) angelenkt ist, wobei er zwischen einer ersten Funktions- und eingefahrenen Position in die Struktur und einer zweiten Zugriffsposition auf den die Backenbremse tragenden Arm (4) verlagerbar ist.

2. Haltungseinheit nach Anspruch 1, **dadurch gekennzeichnet, dass** zwischen jedem Aktuatorarm (3) und dem entsprechenden die Backenbremse tragenden Arm (4) ein Einstellmittel (8) zwischengestellt ist.

3. Haltungseinheit nach Anspruch 1 oder Anspruch 2, **dadurch gekennzeichnet, dass** die Aktuatorarme (3) und die die Backenbremse tragenden Arme (4) in Freigabeposition der Bremsbacken von Rückholfedern (6) gegeneinander beansprucht werden, ohne die Felge zu bremsen.

4. Haltungseinheit nach einem der Ansprüche 1 bis 3, **dadurch gekennzeichnet, dass** die Aktuatorarme (3) mit ihren zweiten Enden mit einem Betätigungsmittel (14) der Felgenbremse verbunden sind.

5. Haltungseinheit nach Anspruch 4, **dadurch gekennzeichnet, dass** das Betätigungsmittel der Felgenbremse ein auf einem Aktuatorarm (3) angelenktes Dreieckteil (10) aufweist, das mit dem anderen Aktuatorarm (3) mit einem Hebel (12) verbunden ist und mit einer Traktionssteuerung (14) verbunden ist, die dazu bestimmt ist, die zwei Aktuatorarme (3) beim Bremsen einander anzunähern.

6. Haltungseinheit nach Anspruch 2, **dadurch gekennzeichnet, dass** jeder Aktuatorarm (3) einen Durchgang (3a) für ein Justiermittel des zwischen jedem Aktuatorarm (3) und dem entsprechenden die Backenbremse tragenden Arm (4) zwischengestellten Einstellmittels (8) aufweist.

7. Haltungseinheit nach Anspruch 2 oder Anspruch 6, **dadurch gekennzeichnet, dass** das zwischen jedem Aktuatorarm (3) und dem entsprechenden die Backenbremse tragenden Arm (4) zwischengestellte Einstellmittel (8) ein Einstellmittel durch Schrauben des Kontakts zwischen dem zwischen dem die Backenbremse tragenden Arm (4) und dem Aktuatorarm (3) ist.

8. Haltungseinheit nach Anspruch 7, **dadurch gekennzeichnet, dass** das Einstellmittel (8) eine Abstandsschraube (9) aufweist, die in den die Backenbremse tragenden Arm (4) montiert ist und durch eine in den entsprechenden Aktuatorarm (3) eingearbeitete Öffnung (3a) zugänglich ist.

## Claims

1. A bicycle wheel (2) supporting assembly (1) provided with a caliper brake (5) on the rim incorporated into the structure of the supporting assembly (1), said caliper brake including two actuating arms (3) and two caliper support arms (4), **characterized in that** each actuating arm (3) associated with a caliper support arm (4) is articulated in a recess (1 a) of the structure of the support assembly (1) while being movable between a first operating position retracted inside the structure and a second position for access to the caliper support arm (4).

2. The supporting assembly according to claim 1, **characterized in that** an adjusting means (8) is interposed between each actuating arm (3) and the corresponding caliper support arm (4).

3. The supporting assembly according to claim 1 or claim 2, **characterized in that** the actuating arms (3) and the caliper support arms (4) are stressed against each other by return springs (6) returning the calipers to the relaxed position without braking the rim.

4. The supporting assembly according to any one of claims 1 to 3, **characterized in that** the actuating arms (3) are connected by their second ends to an actuating means (14) for actuating the caliper brake.

5. The supporting assembly according to claim 4, **characterized in that** the means for actuating the caliper brake includes a triangular part (10) articulated on an actuating arm (3), connected to the other actuating arm (3) by a tie rod (12) and connected to a traction command (14) designed to bring the two actuating arms closer together (3) during braking.

6. The supporting assembly according to claim 2, **characterized in that** each actuating arm (3) includes a passage (3a) for an adjusting tool of the adjusting means (8) interposed between each actuating arm (3) and the corresponding caliper support arm (4).

7. The supporting assembly according to claim 2 or claim 6, **characterized in that** the adjusting means (8) interposed between each actuating arm (3) and the corresponding caliper support arm (4) is an adjusting means by screwing the contact between the caliper support arm (4) and the actuating arm (3).

8. The supporting assembly according to claim 7, **characterized in that** the adjusting means (8) includes a separating screw (9) mounted in the caliper support arm (4) and accessible through an aperture (3a) formed in the corresponding actuating arm (3).
